# EUROPÄISCHE PATENTSCHRIFT

(11) **EP 0 713 741 B1**
(45) Veröffentlichungstag und Bekanntmachung des Hinweises auf die Patenterteilung: **17.03.1999**
(21) Anmeldenummer: 95114941.8
(22) Anmeldetag: 22.09.1995
(51) Int. Cl.: B23D 31/00, F16C 9/04

(54) **Verfahren zum Bruchtrennen eines Bauteiles in einer Durchbrechung benachbarten Querschnitten, insbesondere geteilte Lageranordnungen, vorzugsweise Pleuel von Hubkolbenmaschinen**
Process for fracture separation of a workpiece in an area close to a bore, particularly for split bearings, preferably connecting rods of alternating piston engines
Procédé pour la séparation d'une pièce par rupture dans des sections voisines d'un perçage, en particulier des paliers en coquilles, de préférence des bielles de machines à piston alternatif

(30) Priorität: 25.11.1994 DE 4442062
(43) Veröffentlichungstag der Anmeldung: 29.05.1996
(73) Patentinhaber: Bayerische Motoren Werke Aktiengesellschaft, 80788 München (DE)
(72) Erfinder: Kröhn, Günter, A-4400 Steyr (DE); Wiesemann, Johann, D-80992 München (DE); Luchner, Clemens, D-81673 München (DE)

(56) Entgegenhaltungen:
- EP-A- 0 304 162
- DE-C- 887 314
- FR-A- 2 526 698
- US-A- 1 392 798
- US-A- 1 630 759
- US-A- 2 541 078

## Beschreibung

Die Erfindung bezieht sich auf ein Bruchtrenn-Verfahren eines Bauteiles nach dem Oberbegriff des Patentanspruches 1 und wie aus EP-A-0 304 162 bekannt. Weiter betrifft die Erfindung eine Vorrichtung zur Durchführung des erfindungsgemäßen Verfahrens gemäß dem Oberbegriff des Patentanspruches 3.

Das bekannte Verfahren zum Bruchtrennen findet bevorzugt Anwendung zur Teilung von gesonderten oder an Bauteilen integrierten Lagerringen. Aus der US 1,630,759 sind ein Bruchtrenn-Verfahren und eine Vorrichtung hierfür zum Teilen eines Wälzlagerringes bekannt, wobei zwei im Wälzlagerring diametral in Bruchtrenn-Richtung beweglich angeordnete Segmente sowie ein zwischen diese eintreibbarer Keil der Bruchtrennung dienen. In der EP-B1 0 304 162 ist ein Bruchtrenn-Verfahren zum Teilen eines an einem Pleuel einer Brennkraftmaschine integrierten Lagerringes beschrieben einschließlich einer Vorrichtung, bei der in der Lagerbohrung ebenfalls diametral in Bruchtrenn-Richtung radial beweglich angeordnete Segmente durch einen maschinell angetriebenen Keil Bruchkräfte auf die Lagerringhälften ausüben. Zur Auslösung der Bruchtrennung sind in beiden bekannten Beispielen zumindest an der Innenseite jeder Lagerbohrung in den Ebenen der zukünftigen Bruchtrenn-Querschnitte V-förmige Kerben vorgesehen.

Bei den bekannten Bruchtrenn-Verfahren wirken die nach dem Prinzip von actio und reactio eingeleiteten Bruchkräfte diametral in beiden Lagerringhälften. Diese Belastungsart führt in Abhängigkeit der Duktilität des für das jeweilige Bauteil gewählten Werkstoffes zu entsprechenden bleibenden Verformungen des jeweiligen Lagerringes in gegenüberliegenden Abschnitten in den Bereichen der Bruchtrenn-Querschnitte. Bei einem großen Lagerauge des Pleuels mit Lagerdeckel liegen die Bruch-Querschnitte bekanntlich in für Schrauben einer Deckelfixierung vorgesehenen Schraubenpfeifen. Insbesondere bei nahe an der Lagerbohrung des Pleuelauges angeordneten Schraubenpfeifen werden diese in den Bereichen der verformten Abschnitte bleibend mitverformt, so daß die Schrauben für die Deckelfixierung in die vor dem Bruchtrennen des Pleuelauges in den Schraubenpfeifen ausgebildeten Gewindebohrungen nicht mehr einschraubbar sind.

Der Erfindung liegt die Aufgabe zugrunde, das bekannte Bruchtrenn-Verfahren so auszugestalten, daß insbesondere bei einem duktilen Werkstoff des Bauteiles in quer zur Bruchtrennrichtung diametralen Nachbarbereichen der Bruchtrenn-Querschnitte in der Durchbrechung des Bauteiles nachteilige bleibende Verformungen vermieden sind.

Diese Aufgabe ist mit dem Patentanspruch 1 gelöst. Der Kern der Erfindung ist, gegenüber dem bekannten Stand der Technik die Anzahl der Segmente in einer Durchbrechung des Bauteiles so zu erhöhen, daß nicht nur in Bruchtrenn-Richtung sondern auch quer dazu eine radiale Aufspreizung der Durchbrechung erzielt ist, wobei die eine radiale Aufspreizung durch eine gezielt verringerte Bruchfestigkeit des Bauteils die Bruchtrennung bewirkt, und die andere, orthogonal dazu wirkende Aufspreizung Bauteil-Verformungen verhindernde Stützkräfte erzeugt.

Zwar ist eine gleichmäßige radiale Aufspreizung an sich aus der FR-A 25 26 698 bekannt zum Brechen eines relativ spröden Ringes an einer einzigen, mittels einer Kerbe vorbestimmten Stelle. Jedoch ist das bekannte Bruchtrenn-Verfahren mit einem in den zylindrischen Ring eintreibbaren Konusdorn für Bauteile aus duktilen Werkstoffen wegen der damit verbundenen, über den gesamten Umfang der Durchbrechung des Bauteiles auftretenden Verformung nicht geeignet. Weiter besteht eine Klemm-Gefahr. Diese Nachteile überwindet das erfindungsgemäße Bruchtrenn-Verfahren durch Zwischenschaltung von wenigstens drei derart am Innenumfang der Durchbrechung verteilt angeordneten Segmenten, daß zueinander orthogonale Kräfte zum Bruchtrennen und zur Verhinderung plastischer Verformungen erzielt werden.

Zur Durchführung des Verfahrens bevorzugte Einrichtungen sind in der Zeichnung dargestellt und im folgenden beschrieben.

Es zeigt
- Figur 1: eine erste Einrichtung mit Spreizdorn und einteiliger Spreizhülse,
- Figur 2: eine abgewandelte Einrichtung mit Spreizdorn und gebauter Spreizhülse,
- Figur 3: eine dritte Einrichtung mit Spreizdorn und hülsenartig angeordneten Spreizbacken,
- Figur 4: eine vierte, aus Spreizhülse und Spreizdorn baulich kombinierte Einrichtung zur gemeinsamen Einführung in die Bauteil-Durchbrechung,
- Figur 5: weitere für die vorgenannten Einrichtungen mögliche Segment-Anordnungen,
- Figur 6: eine fünfte Einrichtung mit einem vorrichtungsfest und einem vorrichtungsbeweglich angeordneten Halb-Dorn, und
- Figur 7: eine sechste Einrichtung mit über eine gummielastische Kammer hydraulisch beaufschlagte Segmente.

Zur Durchführung des erfindungsgemäßen Verfahrens zum Bruchtrennen eines Lagerdeckels 1 von einem Lagerauge 2 eines teilweise gezeigten Pleuels 3 einer nicht dargestellten Hubkolbenmaschine umfaßt eine Einrichtung 4 einen in Axialrichtung einer Durchbrechung 5 des Lagerauges 2 bewegbar angeordneten Spreizdorn 6 sowie über den Innenumfang der Durchbrechung 5 verteilt angeordnete Segmente 7, die als biegeelastisch radial nachgiebige Mantelabschnitte einer zum Spreizdorn 6 koaxial ausgerichteten Spreizhülse 8 ausgebildet sind.

Die relativ zum beweglichen Spreizdorn 6 fest angeordnete Spreizhülse 8 ist mittels eines Einsteck-Abschnittes 9 in einer Vorrichtung 10 positioniert. Zur Positionierung des Lagerauges 2 des Pleuels 3 relativ zu den die Durchbrechung 5 durchsetzenden Segmente 7 bilden an den Segmenten 7 radial angeordnete Fortsätze einen Anschlag 11 zur Auflage des Pleuels 3.

Der in die Spreizhülse 8 zum Bruchtrennen des Lagerdeckels 1 vom Lagerauge 2 eindringend angeordnete Spreizdorn 6 ist vorzugsweise als Konus gestaltet, der mit entsprechenden Kegelflächen an den Segmenten 7 zur gleichmäßigen radialen Aufweitung der Durchbrechung 5 des Lagerauges 2 zusammenwirkt. Um mit der radialen Aufweitung eine gezielte Bruchtrennung zu erzielen, sind in der quer zur Bruchtrennrichtung "B" liegenden Mittenebene "E" der Durchbrechung 5 an deren Umfang diametral Kerben 12 angeordnet, die wesentlich die Lage der Bruchtrenn-Querschnitte 13, 14 im Lagerauge 2 bestimmen. Für diese Kerben 12 ist eine Kerbformzahl 2,5 vorteilhaft. Mit der gezielten Verringerung der Bruchfestigkeit des Lagerauges 2 durch geometrische Kerben 12 und/oder technologische Kerbstellen - z.B. Versprödung - ist bei einem duktilen Werkstoff sichergestellt, daß die beiderseits der Kerben 12 benachbarten Segmente 7 einer Verformung des Lagerauges 2 durch Stützkräfte entgegenwirken, während die übrigen Segmente im wesentlichen die Bruchtrennkräfte bewirken.

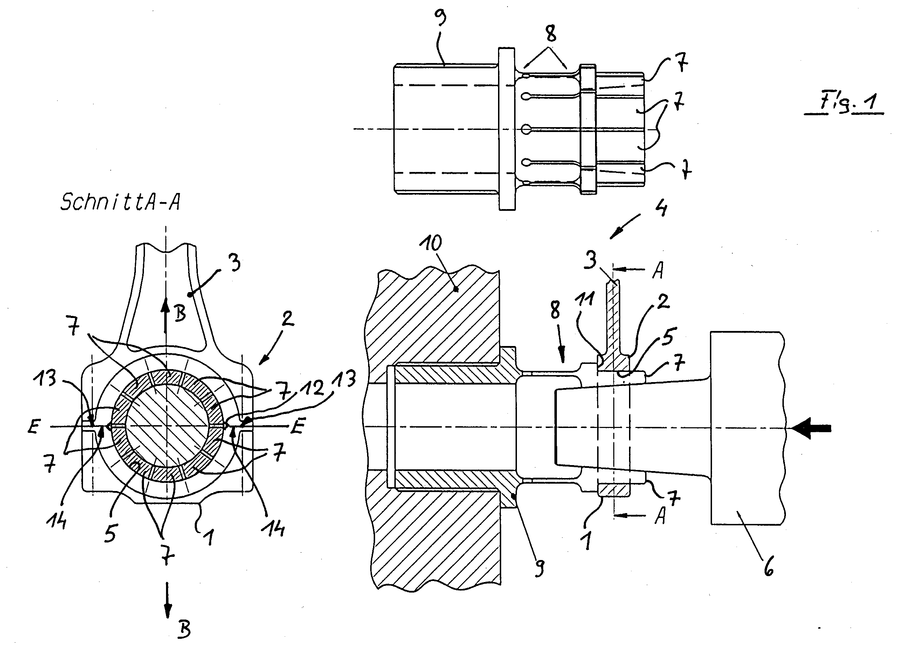

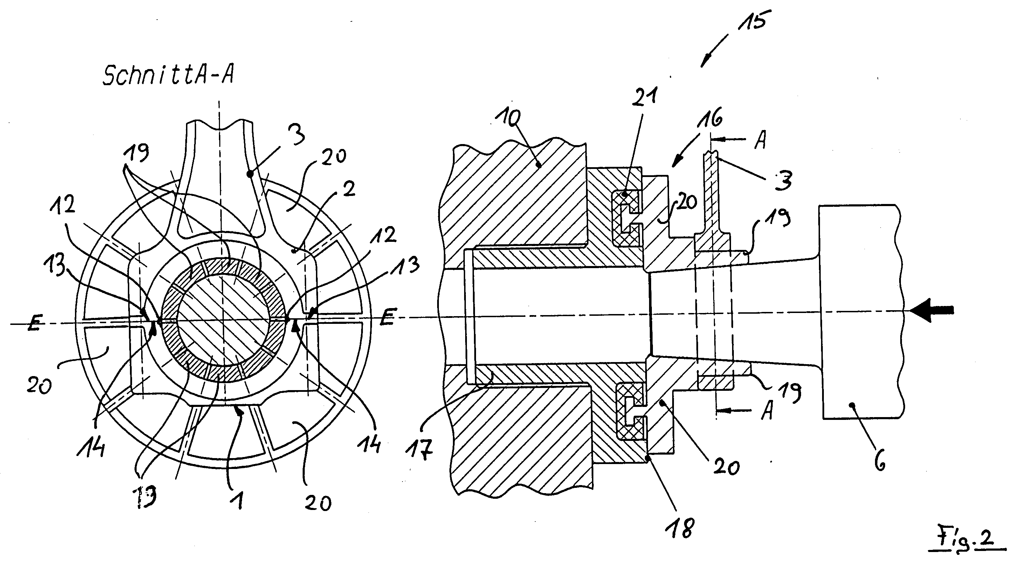

Eine in Figur 2 gezeigte Einrichtung 15 unterscheidet sich von der Einrichtung 4 der Figur 1 durch eine gebaute Spreizhülse 16. Diese Spreizhülse 16 umfaßt zur vorrichtungsfesten Positionierung einen gesonderten Einsteck-Abschnitt 17 mit einem Radialflansch 18 sowie davon gesonderte Segmente 19 mit radial gerichteten Führungselementen 20, die zur Radialverschiebung der Segmente 19 bei einer Bruchtrennung des Lagerauges 2 mit anschließender elastischer Rückstellung der Segmente 19 in Ausgangsposition bei zurückgezogenem Spreizdorn 6 unter Zwischenschaltung eines festhaftend angeordneten Gummi- oder Elastomer-Ringes 21 mit dem Radialflansch 18 in radial beweglicher Verbindung stehen.

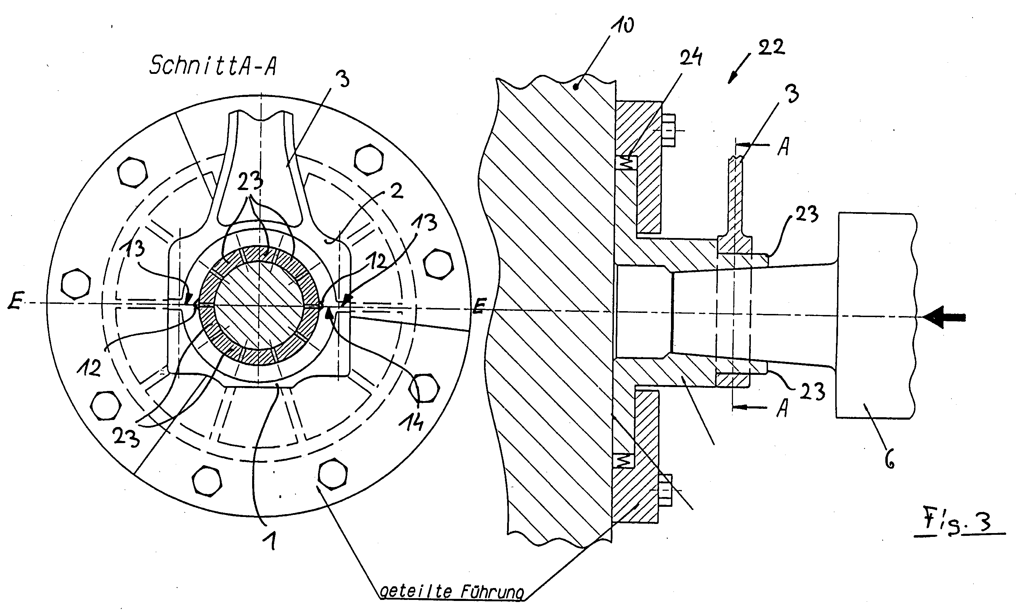

Eine in Figur 3 dargestellte Einrichtung 22 unterscheidet sich von den vorgenannten Einrichtungen 4 und 15 dadurch, daß die Segmente 23 der Einrichtung 22 als vorrichtungsseitig radial beweglich geführt angeordnete Spreizbacken gestaltet sind, wobei die einem vorrichtungsbeweglich angeordnetem Spreizdorn zugeordneten Spreizbacken 23 von radial wirkenden Federn 24 zur Rückstellung in Ausgangsposition nach dem Bruchtrennen des Lagerauges 2 am Pleuel 3 bei zurückgezogenem Spreizdorn 6 beaufschlagt sind.

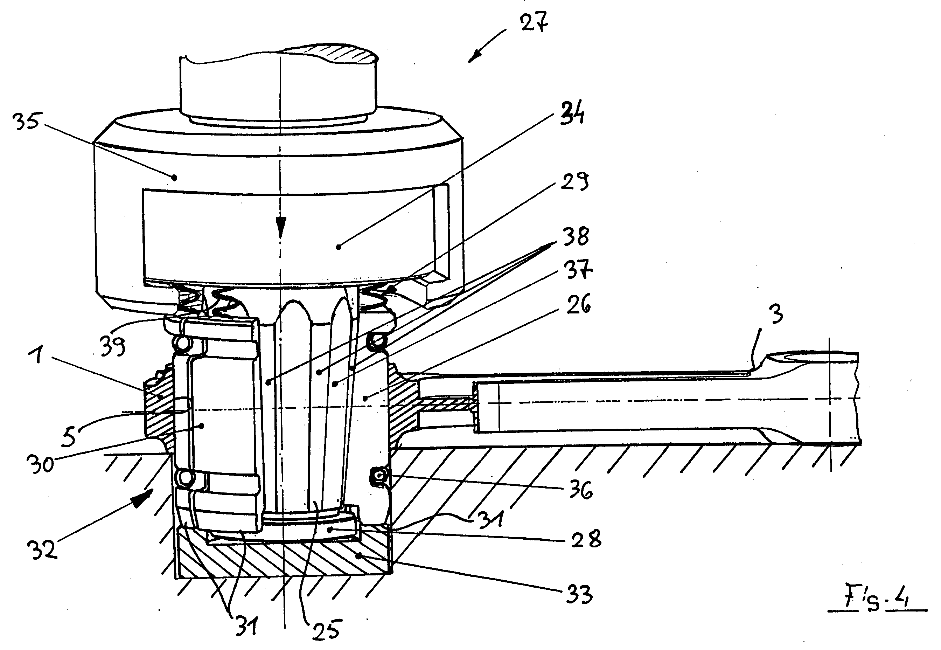

Aus Figur 4 ist eine aus einem Spreizdorn 25 und einer Spreizhülse 26 baulich kombinierte Einrichtung 27 erkennbar. Die Einrichtung 27 umfaßt einen vorrichtungsbeweglich angeordneten Spreizdorn 25 und eine an diesem zwischen einem festen Anschlag 28 und einem elastisch nachgiebigem Anschlag 29 axial beweglich angeordnete Spreizhülse 26 aus umfänglich elastisch verbundenen Segmenten 30. Diese Segmente 30 wirken mit ihren freien, dem festen Dorn-Anschlag 28 benachbarten Enden 31 der in die Durchbrechung 5 des in einer Vorrichtung 32 positionierten Pleuels 3 einführbaren Einrichtung 27 mit einem vorrichtungsfesten Anschlag 33 zusammen während des bis zur Bruchtrennung bewegten Spreizdornes 25.

Wie aus der Figur 4 weiter ersichtlich, ist die Einrichtung 27 zur leichteren Einführung in die Durchbrechung 5 des Pleuels 3 so gestaltet, daß der Spreizdorn 25 über einen Bund 34 in einem Stempel 35 der Vorrichtung 32 radial schwimmend gelagert ist. Weiter weist der Spreizdorn 25 zum leichteren Lösen der aus durch elastische Ringe 36 zusammengehaltenen Segmenten 30 gebildeten Spreizhülse 26 am Ende der Bruchtrennung am Dornumfang über Hohlkehlen 37 verteilt angeordnete Keil- oder Kegelflächen 38 auf.

Zum sicheren Lösen der Spreizhülse 26 vom Spreizdorn 25 nach dem Bruchtrennen umfaßt der elastisch nachgiebige Anschlag 29 zwischen dem Bund 34 des Spreizdornes 25 und den Segmenten 30 der Spreizhülse 36 angeordnete Druckfedern 39.

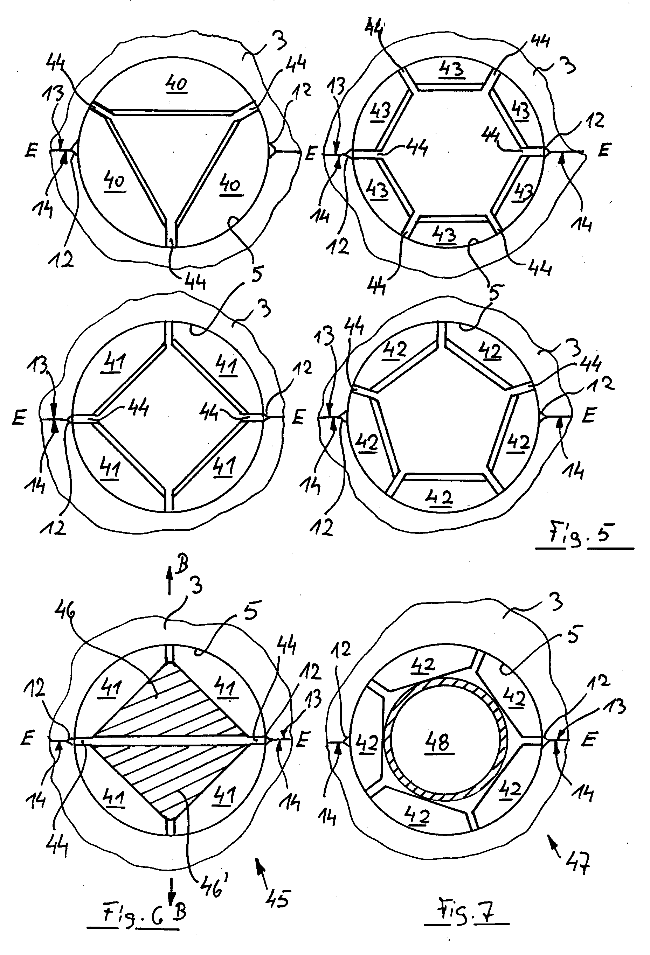

Aus Figur 5 sind für Bruchtrenn-Einrichtungen einschließlich der vorbeschriebenen Bauart mögliche Segment-Anordnungen erkennbar mit drei oder fünf, ferner mit vier oder sechs Segmenten 40, 41, 42, 43, wobei benachbart oder gesondert einander gegenüberliegende Segmente mit ihren freien oder elastisch verbundenen Trennstellen 44 zur Ebene "E" der Bruchtrenn-Querschnitte 13, 14 im wesentlichen ausgemittelt angeordnet sind.

In Figur 6 ist schematisch eine Einrichtung 45 gezeigt mit zwei über symetrisch angeordnete Segmente 41 auf die Durchbrechung 5 eines Bauteiles bzw. eines Pleuels 3 einwirkenden Halb-Dornen 46, 46', wobei der Halb-Dorn 46 vorrichtungsfest und der andere Halb-Dorn 46' in Bruch-Trennrichtung "B" vorrichtungsbeweglich angeordnet ist. Nähere Einzelheiten für eine Bruchtrenn-Einrichtung 45 mit Halb-Dornen 46, 46' sind beispielsweise in der EP-B 467 198 beschrieben. Vorzugsweise sind beide Halb-Dorne 46, 46' und die mit diesen zusammenwirkenden Segmente 41 mit zur Bruch-Trennrichtung "B" geneigt angeordneten, korrespondierenden Keilflächen ausgebildet.

Schließlich ist mit einer Anordnung von Segmenten 42 oder 43 auch eine Einrichtung 47 denkbar, bei der über eine eingesetzte gummielastische Kammer 48 die Segmente 42 oder 43 hydraulisch beaufschlagt sind.

Durch unterschiedlich gewählte Neigungen der Kegel- und/oder Keilflächen an den Segmenten und den korrespondierenden Flächen der zugehörigen Dorne können vorteilhafte Kraftanteile in die einzelnen Segment-Richtungen unterschiedlich gewählt werden, um die Bruchtrennkräfte und die Stützkräfte unterschiedlich groß wählen zu können.

Das erfindungsgemäße Bruchtrenn-Verfahren ermöglicht ein kontrolliertes Brechen von Bauteilen aus spröden sowie aus duktilen Werkstoffen, wobei plastische Verformungen weitgehend vermieden sind. Damit ist ein durch einfache Einrichtungen kostengünstig und technisch vorteilhaftes Bruchtrennverfahren für deutlich größere Werkstoffgruppen aufgezeigt, z.B. Stähle, duktiles Gußeisen sowie diverse Leichtmetall-Legierungen etc.

## Patentansprüche

1. Verfahren zum Bruchtrennen eines Bauteiles in einer Durchbrechung benachbarten Querschnitten, insbesondere geteilte Lageranordnungen, vorzugsweise Pleuel von Hubkolbenmaschinen,
- bei dem eine über eine Einrichtung (4, 15, 22, 27, 45, 47) mit entgegengesetzt radialbeweglichen, am Innenumfang der Durchbrechung (5) anliegende Segmente (7, 19, 23, 30, 40, 41, 42, 43) eingeleitete Kraft in diametral an den Bruchtrenn-Querschnitten (13, 14) wirksame Bruchkräfte umgeformt wird, wobei
- vor dem Bruchtrennen in Teilbereichen der Bruchtrenn-Querschnitte (13, 14) die Bruchfestigkeit des Bauteiles (Pleuel 3) gezielt verringert ist (geometrische und/oder technologische Kerbstelle 12),
dadurch gekennzeichnet,
- daß die Kraft bzw. Kräfte über wenigstens drei derart am Innenumfang der Durchbrechung (5) verteilt angeordnete Segmente (7, 9, 23, 30, 40, 41, 42, 43) der Einrichtung (4, 15, 22, 27, 45, 47) in radial gerichtete Kraft-Komponenten umgeformt wird bzw. werden, daß
- zusätzlich zu den aus in Trennrichtung (B) wirkenden Anteilen der Radialkraft-Komponenten resultierenden Bruchkräften quer zur Bruch-Trennrichtung aus weiteren Anteilen der Radialkraft-Komponenten resultierende, in Nachbarbereichen der Bruchtrenn-Querschnitte (13, 14) am Innenumfang der Durchbrechung (5) wirkende Stützkräfte erzeugt werden.

2. Verfahren nach Anspruch 1, gekennzeichnet durch die Verwendung bei einem Bauteil (Pleuel 3) aus einem duktilen Werkstoff mit Kerbstellen (12) entsprechend einer Kerbformzahl >1,5.

3. Vorrichtung zum Bruchtrennen eines Bauteiles in einer Durchbrechung benachbarten Querschnitten, insbesondere geteilte Lageanordnungen, vorzugsweise Pleuel von Hubkolbenmaschinen,
- umfassend eine Einrichtung (4, 15, 22, 27, 45, 47) mit entgegengesetzt radial beweglichen, am Innenumfang der Durchbrechung (5) des Bauteiles (Pleuel 3) anliegenden Segmenten (7, 19, 23, 30, 40, 41, 42, 43), die
- mit einem Keil- und/oder Kegelflächen aufweisenden Spreiz-Dorn (6, 25, 46, 46') zusammenwirken,
dadurch gekennzeichnet,
- daß mindestens drei Segmente (7, 19, 23, 30, 40, 41, 42, 43) mit dem Spreiz-Dorn (6, 25, 46, 46') zusammenwirkend angeordnet sind.

4. Vorrichtung nach Anspruch 1, dadurch gekennzeichnet, daß die Segmente (7, 19, 23, 30) mit Mitteln zur radialen Rückstellung in die Ausgangsposition nach dem Bruchtrennen in Verbindung stehen.

5. Vorrichtung nach Anspruch 3 und 4, dadurch gekennzeichnet, daß die Einrichtung (4, 15, 27) eine aus Segmenten (7, 19, 30) gebildete Spreizhülse (8, 16, 26) sowie einen in die Spreizhülse eindringbar ausgebildeten Spreizdorn (6, 25) umfaßt.

6. Vorrichtung nach den Ansprüchen 3 bis 5, dadurch gekennzeichnet,
- daß die Spreizhülse (8, 16) relativ zu einem vorrichtungsbeweglich angeordneten Spreizdorn (6) vorrichtungsfest angeordnet ist, und
- daß an den Segmenten (7, 19) radial angeordnete Fortsätze einen Anschlag (11) zur Positionierung des Bauteiles (Pleuel 3) bilden.

7. Vorrichtung nach den Ansprüchen 3 bis 6, dadurch gekennzeichnet,
- daß die Spreizhülse (8) zur vorrichtungsfesten Anordnung einen Einsteck-Abschnitt (9) aufweist, an dem
- die Segmente (7) als biegeelastisch radial nachgiebige Mantelabschnitte der Spreizhülse (8) ausgebildet sind.

8. Vorrichtung nach den Ansprüchen 3 bis 6, dadurch gekennzeichnet,
- daß die Spreizhülse (16) einen gesonderten Einsteck-Abschnitt (17) mit einem Radialflansch (18) sowie
- gesonderte Segmente (19) mit radial gerichteten Führungselementen (20) umfaßt, die
- zur Radialverschiebung mit elastischer Rückstellung unter Zwischenschaltung einer festhaftend angeordneten Gummi- oder Elastomer-Schicht (Ring 21) mit dem Radialflansch (18) in radialbeweglicher Verbindung stehen.

9. Vorrichtung nach Anspruch 3 und 4, dadurch gekennzeichnet,
- daß die Segmente (23) der Einrichtung (22) als vorrichtungsseitig radial beweglich geführt angeordnete Spreizbacken gestaltet sind, wobei
- die einem vorrichtungsbeweglich angeordnetem Spreizdorn (6) zugeordneten Spreizbacken (23) mit Federn (24) zur Rückstellung in Ausgangsposition nach dem Bruchtrennen bei zurückgezogenem Spreizdorn (6) zusammenwirken.

10. Vorrichtung nach den Ansprüchen 3 bis 5, dadurch gekennzeichnet, daß eine Einrichtung (27) einen vorrichtungsbeweglich angeordneten Spreizdorn (25) und eine an diesem Spreizdorn zwischen einem festen Anschlag (28) und einem elastisch nachgiebigen Anschlag (29) axial beweglich angeordnete Spreizhülse (26) aus umfänglich elastisch verbundenen Segmenten (30) umfaßt.

11. Vorrichtung nach Anspruch 10, dadurch gekennzeichnet, daß die Segmente (30) mit ihren freien, dem festen Dorn-Anschlag (28) benachbarten Enden (31) der in eine Durchbrechung (5) des in einer Vorrichtung (32) positionierten Bauteiles (Pleuel 3) einführbaren Einrichtung (27) mit einem vorrichtungsfesten Anschlag (33) zusammenwirken während des bis zur Bruchtrennung bewegten Spreizdornes (25).

12. Vorrichtung nach Anspruch 10 und 11, dadurch gekennzeichnet,
- daß der Spreizdorn (25) über einen Bund (34) in einem Stempel (35) der Vorrichtung (32) radial schwimmend gelagert ist, und
- am Dorn-Umfang über Hohlkehlen (37) verteilt angeordnete Keil- oder Kegelflächen (38) aufweist.

13. Vorrichtung nach den Ansprüchen 10 bis 12, dadurch gekennzeichnet, daß der elastisch nachgiebige Anschlag (29) zwischen dem Bund (34) des Spreizdornes (25) und den Segmenten (30) der Spreizhülse (26) angeordnete Druckfedern (39) umfaßt.

14. Vorrichtung nach den Ansprüchen 10 bis 13, dadurch gekennzeichnet,
- daß eine Spreizhülse eine ungerade Anzahl (3 oder 5) oder eine gerade Anzahl (4 oder 6) Segmente (40, 41, 42, 43) umfaßt, wobei
- gegenüberliegende Segmente mit ihren freien oder elastisch verbundenen Trennstellen (44) zur Ebene (E) der Bruchtrenn-Querschnitte (13, 14) ausgemittelt angeordnet sind.

15. Vorrichtung nach Anspruch 3, dadurch gekennzeichnet,
- daß eine Einrichtung (45) zwei mit Segmenten (41) zusammenwirkende Halb-Dorne (46, 46') umfaßt, wobei
- ein Halb-Dorn (46) vorrichtungsfest und der andere Halb-Dorn (46') in Bruchtrennrichtung vorrichtungsbeweglich angeordnet ist.

16. Vorrichtung nach Anspruch 15, dadurch gekennzeichnet, daß zumindest einer der Halb-Dorne (46, 46') und mit diesem zusammenwirkende Segmente (41) zur Bruch-Trennrichtung (B) geneigt angeordnete, korrespondierende Keilflächen aufweisen.

17. Vorrichtung zur Durchführung des Verfahrens nach Anspruch 1 und 2, dadurch gekennzeichnet, daß eine Einrichtung (47) mittelbar hydraulisch beaufschlagte Segmente (42, 43) umfaßt.

## Claims

1. A method of separating a component by fracture at cross-sections, especially divided bearing arrangements, preferably connecting rods of reciprocating combustion engines, adjoining an opening,
- wherein a force introduced via a device (4, 15, 22, 27, 45, 47) comprising segments (7, 19, 23, 30, 40, 41, 42, 43) movable radially in opposite directions and adjoining the inner periphery of the opening (5) is converted into fracturing forces operating diametrically on the fracture cross-sections (13, 14), wherein
- before separation by fracture, the resistance to fracture of the component (connecting-rod 3) in partial regions of the fracture cross-sections (13, 14) is deliberately reduced (geometrical and/or technological notches or weak places 12),
characterised in that
- the force or forces are converted into radially directed force components via at least three segments (7, 9, 23, 30, 40, 41, 42, 43) of the device (4, 15, 22, 27, 45, 47) which are so distributed on the inner periphery of the opening (5) that
- in addition to the fractionating forces resulting from the parts of the radial force components acting in the separating direction (B), bracing forces perpendicular to the fracture separation direction and resulting from other parts of the radial force components are generated in neighbouring regions of the fracture cross-sections (13, 14) and act on the inner periphery of the opening (5).

2. A method according to claim 1, characterised by use, in the case of one component (connecting rod 3), of a ductile material with notches or weak places (12) corresponding to a notch form factor > 1.5.

3. Apparatus for fracture separation of a component, especially divided bearing arrangements, preferably connecting rods of reciprocating internal combustion engines, at cross-sections adjoining an opening,
- comprising a device (4, 15, 22, 27, 45, 47) having segments (7, 19, 23, 30, 40, 41, 42, 43) movable radially in opposite directions and adjoining the inner periphery of the opening (5) in the component (connecting rod 3) and
- co-operating with an expanding mandrel (6, 25, 46, 46') comprising wedge-shaped and/or conical surfaces,
characterised in that
- at least three segments (7, 19, 23, 30, 40, 41, 42, 43) are disposed so as to co-operate with the expanding mandrel (6, 25, 46, 46').

4. Apparatus according to claim 1, characterised in that the segments (7, 19, 23, 30) are connected to means for radially returning to the starting position after fracture separation.

5. Apparatus according to claims 3 and 4, characterised in that the device (4, 15, 27) comprises an expanding sleeve (8, 16, 26) made up of segments (7, 19, 30) and an expanding mandrel (6, 25) for inserting into the expanding sleeve.

6. Apparatus according to claims 3 to 5, characterised in that
- the expanding sleeve (8, 16) is fastened to the apparatus relative to an expanding mandrel (6) which is movable relative to the apparatus, and
- extensions radially disposed on the segments (7, 19) form a stop (11) for positioning the component (connecting rod 3).

7. Apparatus according to claims 3 to 6, characterised in that
- the expanding sleeve (8) has an insertion portion (9) for fastening to the apparatus, on which
- the segments (7) are disposed in the form of resiliently bendable radially flexible jacket portions of the expanding sleeve (8).

8. Apparatus according to claims 3 to 6, characterised in that
- the expanding sleeve (16) has a separate insertion portion (17) with a radial flange (18) and
- comprises separate segments (19) with radial guide elements (20) which
- are connected in radially movable manner to the radial flange (18) for the purpose of radial displacement with resilient return, with interposition of a firmly adhering rubber or elastomer layer (ring 21).

9. A device according to claims 3 and 4, characterised in that
- the segments (23) of the device (22) are in the form of expanding jaws disposed and guided so as to be radially movable on the same side as the apparatus, wherein
- the expanding jaws (23), which are associated with an expanding mandrel (6) movable relative to the device, co-operate with springs (24) for returning to the starting position after fracture separation and when the expanding mandrel (6) has been withdrawn.

10. Apparatus according to claims 3 to 5, characterised in that a device (27) comprises an expanding mandrel (25) movable relative to the apparatus and also comprises an expanding sleeve (26) made of peripherally resiliently connected segments (30) and axially movable on the expanding mandrel between a fixed stop (28) and a resiliently flexible stop (29).

11. Apparatus according to claim 10, characterised in that the projecting ends (31) of the segments (30) adjoining the fixed mandrel stop (28) co-operate via a stop (33) fixed to the apparatus, during the movement of the expanding mandrel (25) until fracture separation, with the device (27) insertable into an opening (5) in the component (connecting rod 3) positioned in apparatus (32).

12. Apparatus according to claims 10 and 11, characterised in that
- the expanding mandrel (25) is mounted in radially floating manner, via a collar (34), in a punch (35) on the apparatus (32), and
- has wedge-shaped or conical surfaces (38) on the mandrel periphery, separated by grooves (37).

13. Apparatus according to claims 10 to 12, characterised in that the resiliently flexible stop (29) comprises pressure springs (39) disposed between the collar (34) of the expanding mandrel (25) and the segments (30) of the expanding sleeve (26).

14. Apparatus according to claims 10 to 13, characterised in that
- an expanding sleeve has an odd number (3 or 5) or an even number (4 or 6) of segments (40, 41, 42, 43), and
- the projecting or resiliently connected partitions (44) between opposite segments are evened out relative to the plane (E) of the fracture sections (13, 14).

15. Apparatus according to claim 3, characterised in that
- a device (45) comprises two half-mandrels (46, 46') co-operating with segments (41), wherein
- one half-mandrel (46) is fixed to the apparatus and the other half-mandrel (46') is disposed so as to be movable relative to the apparatus in the fracture separation direction.

16. Apparatus according to claim 15, characterised in that at least one half-mandrel (46, 46') and segments (41) co-operating therewith have corresponding wedge surfaces disposed at an angle to the fracture separation direction (B).

17. Apparatus for working the method according to claims 1 and 2, characterised in that a device (47) has segments (42, 43) which are indirectly hydraulically actuated.

## Revendications

1. Procédé de séparation par rupture d'une pièce dans des sections voisines d'un passage, notamment de dispositifs de paliers, divisés, en particulier de bielles de moteurs à pistons alternatifs, selon lequel
- une force induite par l'intermédiaire d'une installation (4, 15, 22, 27, 45, 47) avec des segments (7, 19, 23, 30, 40, 41, 42, 43) appliquée contre la périphérie intérieure du passage (5) et mobile radialement de manière opposée, est transformée en des forces de rupture agissant diamétralement sur les sections de séparation de rupture (13, 14),
- avant la séparation par rupture dans les zones partielles des sections de séparation par rupture (13, 14), on diminue de manière planifiée la résistance de rupture de la pièce (bielle 3) (encoche 12 géométrique et/ou technique),
caractérisé en ce qu'
- on convertit la ou les forces par au moins trois segments (7, 9, 23, 30, 40, 41, 42, 43) de l'installation (4, 15, 22, 27, 45, 47) répartis à la périphérie intérieure du passage (5) de façon à les convertir en des composantes de forces dirigées radialement,
- en plus des parties des composantes de forces radiales agissant dans la direction de séparation (B) on génère, transversalement à la direction de séparation par rupture, des forces de soutien à partir d'autres parties des composantes de forces radiales, et agissant dans les zones voisines des sections de séparation de rupture (13, 14), contre la périphérie intérieure du passage (5).

2. Procédé selon la revendication 1,
caractérisé en ce que
le procédé est appliqué à une pièce (bielle 3) en un matériau ductile avec des points d'encoche (12) correspondant à un nombre de formes d'encoches > 1,5.

3. Dispositif pour la séparation par rupture d'une pièce dans des sections voisines de la rupture, notamment de dispositifs de paliers divisés, de préférence des bielles de moteurs à pistons alternatifs comprenant :
- une installation (4, 15, 22, 27, 45, 47) avec des segments (7, 19, 23, 30, 40, 41, 42, 43) mobiles radialement de manière opposée et s'appliquant contre la périphérie intérieure du passage (5) de la pièce (bille 3),
- ces segments coopérant avec des surfaces en forme de coins et/ou de forme conique d'une broche d'écartement (6, 25, 46, 46'),
caractérisé en ce qu'
- au moins trois segments (7, 19, 23, 30, 40, 41, 42, 43) coopèrent avec la broche d'écartement (6, 25, 46, 46').

4. Dispositif selon la revendication 3,
caractérisé en ce que
les segments (7, 19, 23, 30) coopèrent avec des moyens pour rappeler radialement en position de sortie après la séparation par rupture.

5. Dispositif selon l'une quelconque des revendications 3 et 4,
caractérisé en ce que
l'installation (4, 15, 27) comprend un manchon d'écartement (8, 16, 26) formé de segments (7, 19, 30) ainsi qu'une broche d'écartement (6, 25) qui s'introduit dans le manchon d'écartement.

6. Dispositif selon l'une des revendications 3 à 5,
caractérisé en ce que
- le manchon d'écartement (8, 16) est monté fixe par rapport à une broche d'écartement (6) mobile par rapport au dispositif et
- les segments (7, 19) comportent des prolongements radiaux formant une butée (11) pour positionner la pièce (bielle 3).

7. Dispositif selon l'une des revendications 3 à 6,
caractérisé en ce que
- le manchon d'écartement (8) comporte un segment d'engagement (9) pour son montage solidaire du dispositif, sur lequel
- les segments (7) sont réalisés sous la forme de segments d'enveloppe du manchon d'écartement (8), cédant radialement de manière élastique en flexion.

8. Dispositif selon l'une des revendications 3 à 6,
caractérisé en ce que
- le manchon d'écartement (16) comporte un segment d'engagement (17) particulier avec une bride radiale (18) et
- des segments particuliers (19) avec des éléments de guidage (20) dirigés radialement,
- ces éléments sont en liaison, pour le déplacement radial avec rappel élastique et insertion d'une couche en caout-chouc ou en élastomère (anneau 21) accrochée solidairement, en coopérant de manière mobile radialement à la bride radiale (18).

9. Dispositif selon les revendications 3 ou 4,
caractérisé en ce que
- les segments (23) de l'installation (22) sont réalisés sous la forme de mors d'écartement, guidés de manière mobile radialement du côté du dispositif, et
- les mors d'écartement (23) associés à la broche d'écartement (6), mobile par rapport au dispositif, coopèrent avec des ressorts (24) pour être rappelés en position de repos après la séparation par rupture lorsque la broche d'écartement (6) est retirée.

10. Dispositif selon l'une des revendications 3 à 5,
caractérisé par
une installation (27) comportant une broche d'écartement (25) mobile par rapport au dispositif et un manchon d'écartement (26) formé de segments (30) reliés élastiquement dans la direction périphérique, ce manchon étant mobile axialement sur cette broche d'écartement, entre une butée fixe (28) et une butée (29) souple élastiquement.

11. Dispositif selon la revendication 10,
caractérisé en ce que
les segments (30) coopèrent avec leurs extrémités (31) libres, voisines de la butée fixe (28) de la broche, de l'installation (27) qui s'introduit dans un passage (5) de la pièce (bielle 3) placée dans un dispositif (32), en coopérant avec une butée fixe (33) pendant que la broche d'écartement (25) est déplacée jusqu'à la séparation par rupture.

12. Dispositif selon les revendications 10 et 11,
caractérisé en ce que
- la broche d'écartement (25) est montée de manière flottante radialement par l'intermédiaire d'une collerette (34) dans un poinçon (35) du dispositif (32) et
- la périphérie de la broche comporte des surfaces de coins ou des surfaces coniques (38) réparties avec des gorges (37).

13. Dispositif selon les revendications 10 à 12,
caractérisé en ce que
la butée (29) souple élastique comprend des ressorts de compression (39) entre la collerette (34) de la broche d'écartement (25) et les segments (30) du manchon d'écartement (26).

14. Dispositif selon les revendications 10 à 13,
caractérisé en ce que
- un manchon d'écartement comporte un nombre impair (3 ou 5) ou un nombre pair (4 ou 6) de segments (40, 41, 42, 43) et
- les segments opposés sont décentrés avec leur point de séparation (44), libre ou relié élastiquement, par rapport au plan (E) des sections de séparation de rupture (13, 14).

15. Dispositif selon la revendication 3,
caractérisé par
- une installation (45) comprenant deux demi-broches (46, 46') coopérant avec des segments (41),
- une demi-broche (46), solidaire du dispositif de l'autre demi-broche (46'), étant mobile par rapport au dispositif dans la direction de séparation par rupture.

16. Dispositif selon la revendication 15,
caractérisé en ce qu'
au moins l'une des demi-broches (46, 46') et les segments (41) coopérant avec celle-ci sont inclinés par rapport à la direction de séparation de rupture (B) avec des surfaces de coins correspondantes.

17. Dispositif pour la mise en oeuvre du procédé selon l'une des revendications 1 et 2,
caractérisé en ce qu'
une installation (47) comprend des segments (42, 43) sollicités directement de manière hydraulique.
